# DEMANDE DE BREVET EUROPEEN

(11) **EP 1 202 181 A1**
(43) Date de publication de la demande: **02.05.2002**
(21) Numéro de dépôt: 01410134.9
(22) Date de dépôt: 24.10.2001
(51) Int. Cl.: G06F 12/14

(54) **Contrôle d'accès à une mémoire intégrée avec un microprocesseur**

(30) Priorité: 25.10.2000 FR 0013684
(71) Demandeur: DOLPHIN INTEGRATION, F-38240 Meylan (FR)
(72) Inventeur: Barret Gauthier, 38190 Lancey (FR); Pollet, Jean-François, 38560 Jarrie (FR)
(74) Mandataire: de Beaumont, Michel

(57) **Abrégé**

L'invention concerne un procédé et un circuit de contrôle d'accès à tout ou partie du contenu d'une première mémoire (2, 3) intégrée avec un microprocesseur (10), qui consiste à utiliser une interruption prioritaire (PRIORIN), à utiliser au moins un registre de clés (21), et à appliquer au moins un algorithme de contrôle d'accès contenu dans une deuxième mémoire auxiliaire (20) et faisant appel au contenu d'au moins un élément de mémorisation (2) également intégré et au contenu du registre de clés, le contenu de la mémoire auxiliaire étant programmable une seule fois.

## Description

La présente invention concerne le domaine des micro-contrôleurs ou microprocesseurs embarqués (intégrés) avec d'autres fonctions dans un même circuit. Ces autres fonctions sont typiquement des mémoires, des périphériques spécifiques ou d'autres microprocesseurs. Par exemple, le développement de nouveaux circuits fait de plus en plus souvent appel à des coeurs de microprocesseurs réutilisables, généralement appelés des "composants virtuels". Cette technique permet, pour une application donnée, de développer un circuit parfaitement adapté aux besoins, tout en profitant d'un coeur de microprocesseur déjà connu et éprouvé. On profite ainsi de la miniaturisation des circuits intégrés pour, non seulement associer le microprocesseur à d'autres circuits de traitement liés à l'application, mais également pour miniaturiser le processeur lui-même.

L'invention concerne la protection des programmes et/ou données contenus dans un circuit intégrant un microprocesseur et une ou plusieurs mémoires. Plus généralement, on cherche à contrôler l'accès à des mémoires dont les signaux transitant sur des liaisons physiques (bus) d'échange avec le microprocesseur ne sont pas mesurables directement par un appareil électronique.

Il est en effet souhaitable de protéger les programmes applicatifs du circuit intégré ainsi que certaines données. Pour les programmes, cette protection est destinée, en particulier, à éviter un piratage des programmes conçus par un développeur donné et à éviter une disparition accidentelle des programmes.

Aujourd'hui, une solution consiste à utiliser des moyens de type fusibles pour bloquer définitivement l'accès à certaines mémoires du circuit intégré. Toutefois, un inconvénient est que ces mémoires ne sont alors plus accessibles, même par un développeur autorisé, dans le cadre d'opérations de maintenance.

Une autre solution connue est de donner un code d'accès à fournir au circuit intégré pour autoriser l'accès à une de ses mémoires. Un inconvénient de cette solution est qu'il suffit de connaître ce code d'accès pour contourner la protection.

La présente invention vise à pallier les inconvénients des solutions connues de contrôle d'accès à une ou plusieurs mémoires intégrées avec un microprocesseur.

L'invention vise, plus particulièrement, à proposer un procédé de contrôle d'accès qui ne bloque pas définitivement l'accès aux mémoires protégées.

L'invention vise également à proposer une solution qui permette au fabricant du circuit intégré et/ou au développeur du programme applicatif d'individualiser les contrôles d'accès aux différentes mémoires.

L'invention vise également à proposer une solution dans laquelle il ne suffise pas de posséder un code ou clé d'accès pour accéder aux mémoires protégées.

Pour atteindre ces objets, la présente invention prévoit un procédé de contrôle d'accès à tout ou partie du contenu d'une première mémoire intégrée avec un microprocesseur, consistant :
à utiliser une interruption prioritaire ;
à utiliser au moins un registre de clés ; et
à appliquer au moins un algorithme de contrôle d'accès contenu dans une deuxième mémoire auxiliaire et faisant appel au contenu d'au moins un élément de mémorisation également intégré et au contenu du registre de clés, le contenu de la mémoire auxiliaire étant programmable une seule fois.

Selon un mode de réalisation de la présente invention, au moins un sous-programme permettant d'autoriser l'exécution d'une fonction d'accès à la première mémoire est contenue dans la mémoire auxiliaire.

Selon un mode de réalisation de la présente invention, l'interruption prioritaire est non-interruptible, même par elle-même.

Selon un mode de réalisation de la présente invention, on génère ladite interruption prioritaire à la condition qu'un signal indicateur d'un mode de fonctionnement à contrôle d'accès soit dans un état actif.

Selon un mode de réalisation de la présente invention, ladite interruption prioritaire peut être générée à l'apparition d'une demande d'interruption provenant de l'extérieur du circuit intégré ou de l'intérieur.

Selon un mode de réalisation de la présente invention, ladite première mémoire est une mémoire programme contenant des fonctions embarquées.

Selon un mode de réalisation de la présente invention, ledit élément de mémorisation est constitué de la mémoire programme.

L'invention prévoit également un circuit intégrant un microprocesseur et au moins une première mémoire, qui comporte une deuxième mémoire auxiliaire propre à contenir au moins un sous-programme permettant d'autoriser l'exécution d'une fonction d'accès à ladite première mémoire, ladite mémoire auxiliaire étant programmable une seule fois.

Selon un mode de réalisation de la présente invention, le circuit comporte des moyens pour sélectionner, en entrée d'une interface mémoire du microprocesseur, une mémoire parmi au moins :
ladite mémoire auxiliaire ; et
ladite première mémoire, la sélection de ladite première mémoire, autrement que pour l'exécution d'une fonction qu'elle contient, nécessitant une autorisation à partir d'un algorithme contenu dans la mémoire auxiliaire et faisant appel au contenu d'au moins un élément de mémorisation également intégré et au contenu du registre de clés.

Selon un mode de réalisation de la présente invention, la première mémoire et l'élément de mémorisation sont une seule et même mémoire programme.

Selon un mode de réalisation de la présente invention, le circuit comporte des moyens pour générer une interruption prioritaire d'exécution dudit sous-programme, la génération s'effectuant à condition :
qu'un signal indicateur d'un mode de fonctionnement à contrôle d'accès soit dans un état actif ;
qu'un accès à la première mémoire ait été demandé autrement que pour une exécution non interruptible d'une des fonctions qu'elle contient ; et
qu'un signal d'interruption soit actif, l'interruption prioritaire résultante étant non interruptible, même par elle-même.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 représente, de façon très schématique et sous forme de blocs, l'architecture d'un circuit intégrant un microprocesseur selon la présente invention ;
la figure 2 est un organigramme simplifié d'un mode de mise en oeuvre du procédé de contrôle d'accès selon la présente invention ;
la figure 3 illustre, de façon schématique et sous forme de blocs, la fonction réalisée par un multiplexeur de mémoires d'un circuit selon l'invention ;
la figure 4 représente un mode de réalisation d'un circuit de sélection selon la présente invention ; et
la figure 5 représente, de façon simplifiée, un mode de réalisation d'un générateur d'interruption prioritaire selon l'invention.

Les mêmes références désignent les mêmes éléments aux différentes figures. Pour des raisons de clarté, seuls les éléments d'un circuit intégrant un microprocesseur ainsi que des étapes de procédé qui sont utiles à la compréhension de l'invention ont été représentés aux figures et seront décrits par la suite. En particulier, les structures et le fonctionnement d'un contrôleur d'interruption sont à la portée de l'homme du métier et ne font pas l'objet de l'invention.

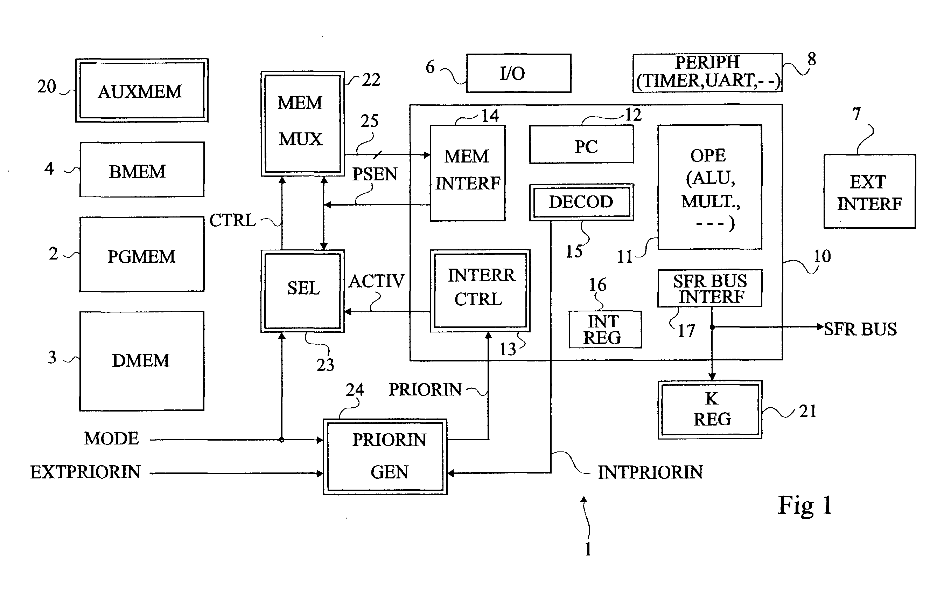

La figure 1 représente, de façon très schématique et simplifiée, un mode de réalisation d'un circuit 1 intégrant un microcontrôleur ou microprocesseur et divers périphériques. Ces périphériques peuvent être intégrés indifféremment dans le même circuit ou dans un autre circuit de l'application. Parmi ceux-ci, on trouve une mémoire programme 2 (PGMEM) contenant les programmes embarqués de l'application, une mémoire vive 3 (DMEM) destinée à contenir les données, et une mémoire de démarrage 4 (BMEM) contenant les instructions nécessaires à l'initialisation du circuit intégré.

Les constituants du microprocesseur proprement dits sont regroupés au sein d'un bloc 10 comportant, essentiellement :
un bloc d'opérateurs 11 (OPE) comprenant, entre autres, une unité arithmétique et logique (ALU), des multiplieurs (MULT), etc. ;
un compteur programme 12 (PC) ;
un contrôleur d'interruption 13 (INTERR CTRL) ;
une interface mémoire 14 (MEM INTERF) par laquelle transitent les adresses de lecture et/ou d'écriture dans les mémoires 2, 3 et 4, et les données depuis et vers ces mémoires ainsi que les signaux de commande en lecture et en écriture ;
un décodeur d'instruction 15 (DECOD) ;
un ou plusieurs registres internes 16 (INTREG) ; et
un circuit 17 d'interface (SFR BUS INTERF) avec un bus (SFR BUS) destiné à permettre la communication entre le microprocesseur 10 et des registres utilisateurs intégrés dans le circuit 1.

Le plus souvent, le circuit 1 intègre également des ports d'entrée-sortie 6 (I/O) qui communiquent individuellement avec l'extérieur du circuit 1. Il comprend en outre une interface externe 7 (EXT INTERF), et des périphériques 8 (PERIPH) standards, par exemple, un port série (UART), un ou plusieurs compteurs (TIMER), etc.

Selon la présente invention, le circuit 1 intègre également :
une mémoire auxiliaire 20 (AUX MEM) destinée à contenir des sous-programmes permettant d'autoriser (au moyen d'algorithmes) l'exécution d'une fonction d'accès au contenu d'une mémoire à protéger et d'exécuter cette fonction ;
un ou plusieurs registres 21 (K REG) destinés à contenir des clés d'accès utilisés par les algorithmes de la mémoire auxiliaire, ces registres 21 communiquant, par exemple, avec le circuit 17 ;
un circuit 22 de multiplexage des mémoires (MEM MUX) ;
un sélecteur 23 (SEL) de la mémoire à utiliser ; et
un générateur 24 d'une interruption prioritaire (PRIORIN GEN) propre à l'invention.

Au sens de l'invention, on entend par fonction d'accès à un contenu d'une mémoire, un accès autre que celui mis en oeuvre par le microprocesseur lors du déroulement du programme applicatif. Il peut s'agir, par exemple, d'une lecture pour affichage d'un programme, d'une écriture d'un programme, d'un test d'un programme (par exemple, une exécution pas à pas), d'une modification d'un programme, de l'effacement d'un programme, d'une lecture d'une donnée, etc.

Une caractéristique de l'invention est que la mémoire auxiliaire n'est programmée qu'une seule fois. Il s'agit, par exemple, d'une mémoire morte (ROM), d'une mémoire de type OTP, d'une mémoire protégée par fusibles, etc.

Selon l'invention, la mémoire dont on souhaite protéger le contenu est intégrée avec le microprocesseur ou, à tout le moins, ses liaisons avec le microprocesseur ne sont pas mesurables directement par un appareil électronique une fois le circuit fabriqué. Pour simplifier la présente description, on fera par la suite référence à des mémoires intégrées avec le circuit 1 pour désigner des mémoires dont les liaisons avec le microprocesseur ne sont pas mesurables.

L'invention sera décrite par la suite en relation avec un exemple de contrôle d'accès à une partie de la mémoire programme 2. Toutefois, sauf précision contraire, tout ce qui sera décrit s'applique également à un contrôle d'accès à tout ou partie d'une mémoire contenant des données (mémoire 3 ou registres utilisateurs).

Selon l'invention, le générateur d'interruption 24 reçoit :
un signal EXTPRIORIN d'interruption externe ;
un signal MODE, fixé par l'utilisateur ou le développeur, et indicateur du mode de fonctionnement souhaité entre un mode d'exploitation normal du circuit intégré et un mode d'accès protégé à la mémoire programme 2 ; et
un signal INTPRIORIN d'interruption interne provenant du décodeur 15.

Le générateur 24 délivre un signal d'interruption (PRIORIN) au contrôleur 13. L'interruption PRIORIN correspond au rang de priorité le plus élevé. Le contrôleur d'interruption 13 délivre un signal ACTIV d'activation au sélecteur 23 qui reçoit également le signal MODE. Le circuit 23 reçoit en outre un signal PSEN provenant de l'interface mémoire 14 du microprocesseur 10. Le signal PSEN indique, au circuit de sélection 23, que l'interface mémoire communique avec une des mémoires 2, 4 ou 20.

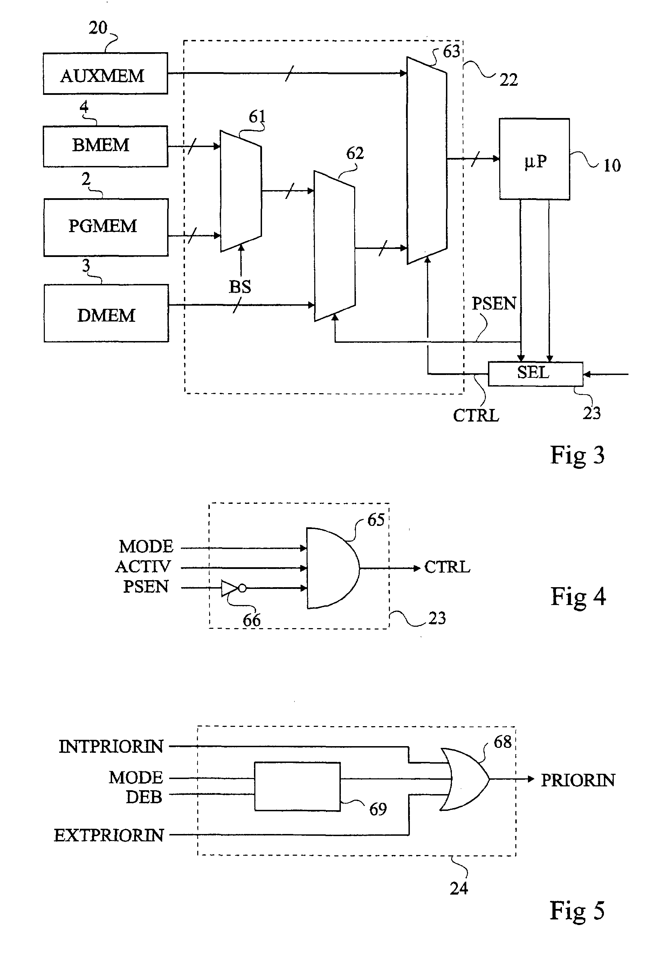

Le circuit de sélection 23 commande le multiplexeur de mémoires 22 dont le rôle est de sélectionner l'une des mémoires 2, 3, 4 ou 20 pour communication avec l'interface 14, donc avec le microprocesseur. Le multiplexeur 22 reçoit un signal de commande CTRL du circuit 23 ainsi que le signal PSEN de l'interface mémoire 14. Tout transfert entre l'une des mémoires 2, 3, 4 ou 20 et l'interface mémoire 14 du microprocesseur transite par le multiplexeur mémoire 22 qui communique avec le microprocesseur 10 par un bus 25. La fonction remplie par le multiplexeur mémoire 22 sera mieux comprise par la suite en relation avec la figure 3.

D'autres signaux transitent bien entendu entre les différents blocs du circuit 1. Ceux-ci n'ont pas été représentés car ils ne font pas l'objet de l'invention et sont soit classiques, soit à la portée de l'homme du métier à partir des indications fonctionnelles de la présente description.

La répartition des mémoires 2, 3, 4 et 20 illustrée par la figure 1 est fonctionnelle. En pratique, certaines de ces mémoires (par exemple, la mémoire auxiliaire 20 et la mémoire de démarrage 4) pourront correspondre à des zones d'une même mémoire, pourvu que l'on respecte leurs fonctions particulières.

L'exécution d'un sous-programme de la mémoire auxiliaire 20 est provoquée par l'interruption spécifique PRIORIN. Cette interruption a pour caractéristique d'être non interruptible même par elle-même. En d'autres termes, on doit attendre la fin de l'exécution des instructions du programme sur lequel le branchement s'est effectué suite à l'apparition de cette interruption prioritaire avant qu'une nouvelle interruption du même type puisse être exécutée. Selon l'invention, cette interruption peut avoir deux origines. Une première origine est une origine externe au circuit intégré au moyen d'une borne dédiée de celui-ci (signal EXTPRIORIN). Une deuxième origine est interne ou logicielle et est générée par le microprocesseur lui-même (par exemple, le fonctionnement pas à pas d'un programme) ou par un périphérique (signal INTPRIORIN).

Pour sélectionner la mémoire auxiliaire, il faut non seulement que l'interruption prioritaire soit activée mais également que l'utilisateur ait programmé le signal MODE. Dans le mode de réalisation exposé, il faut de plus qu'un accès à la mémoire de données ne soit pas en cours pour que le sélecteur 23 soit susceptible de sélectionner la mémoire auxiliaire 20 par le multiplexeur 22. La condition d'accès à la mémoire de données n'est pas obligatoire. Elle dépend du microprocesseur utilisé.

Le ou les algorithmes de contrôle d'accès tiennent compte des clés contenues dans le ou les registres 21 et de mots contenus ailleurs dans au moins un élément de mémorisation du circuit intégré, par exemple, dans la mémoire programme 2. Le ou les algorithmes sont contenus dans la mémoire auxiliaire, donc inaccessibles après une première programmation. Par exemple, un algorithme pourra consister en une fonction de type OU Exclusif entre le ou les mots d'un registre de clés et des mots localisés à des adresses prédéfinies de la mémoire programme (par exemple, les n premiers mots du programme auquel l'accès est demandé). On peut également prévoir une comparaison bit par bit avec des constantes ou tout autre procédé de validation de clés.

Un développeur autorisé connaît au moins certains des algorithmes, notamment, ceux qui lui sont nécessaires pour écrire les programmes applicatifs en tenant compte des informations nécessaires à l'algorithme de contrôle d'accès.

A chaque fonction d'accès au contenu d'une mémoire, peut être associé un algorithme différent utilisant des clefs qui peuvent elles-mêmes être différentes.

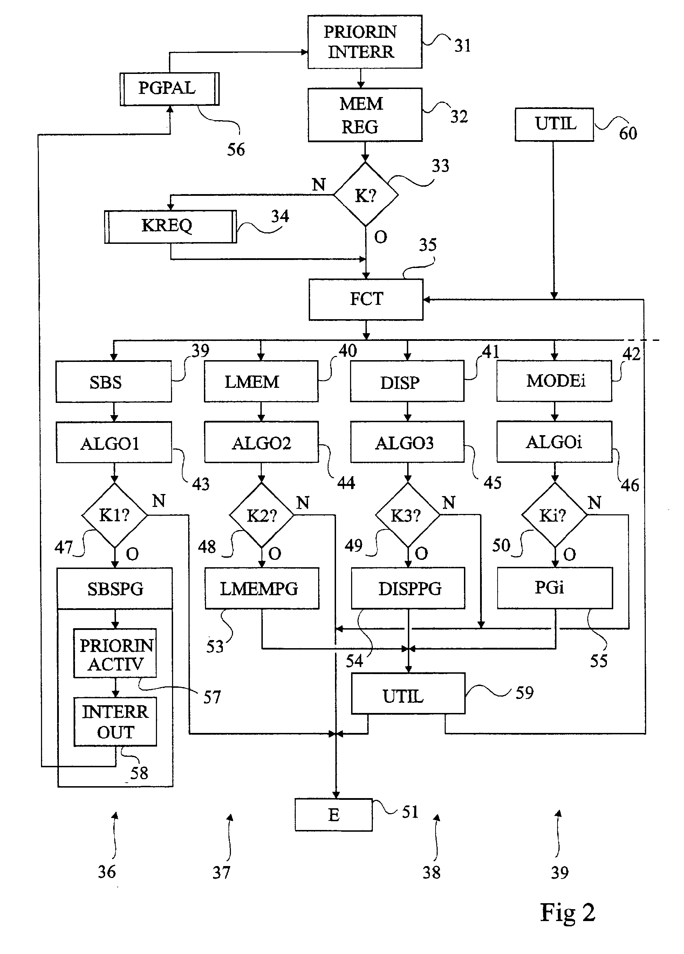

La figure 2 représente, sous la forme d'un organigramme simplifié, un exemple de sous-programme de la mémoire auxiliaire selon l'invention. Ce sous-programme sert à exécuter des fonctions d'accès à la mémoire programme. On suppose qu'une commutation adéquate du signal MODE a provoqué le basculement du circuit intégré vers le mode à contrôle d'accès et qu'une interruption PRIORIN est générée (bloc 31, PRIORIN INTERR) par le circuit 24. A l'apparition de l'interruption PRIORIN dans le contrôleur 13, celui-ci active le sélecteur 23 qui, comme le signal MODE est dans l'état approprié, sélectionne la communication de l'interface mémoire 14 avec la mémoire auxiliaire 20. Les instructions exécutées sont alors des instructions contenues dans la mémoire auxiliaire 20.

On commence (bloc 32, MEM REG) par sauvegarder les contenus des registres essentiels 16 du circuit intégré. Puis (bloc 33), on vérifie si les registres de clés 21 ont déjà été écrits par des outils matériels et/ou logiciels externes. En effet, l'exécution du sous-programme de la mémoire auxiliaire peut intervenir alors que ces registres ont déjà été renseignés, auquel cas une réintroduction n'est pas nécessaire. Par conséquent, le test 33 conduit, dans le cas où les clés 21 n'ont pas été introduites, à un sous-programme (bloc 34, KREQ) d'écriture des registres de clés. En fin de ce sous-programme, on retrouve le branchement correspondant à une réponse affirmative du test 33 sur des instructions (bloc 35, FCP) d'attente et d'identification de la fonction demandée par le développeur. L'entrée dans le bloc 35 s'effectue, par exemple, par l'intermédiaire d'un bloc 60 (UTIL) illustrant une saisie, par l'utilisateur ou le développeur, de la fonction choisie.

Le programme se poursuit sur des branches 36, 37, 38 ou 39 selon la fonction demandée. Dans l'exemple de la figure 2, la branche 36 correspond à une demande d'exécution pas à pas d'un programme contenu dans la mémoire 2. La branche 37 correspond à une demande d'écriture dans la mémoire programme 2, par exemple, un chargement de programme dans une mémoire flash constitutive de cette mémoire programme. La branche 38 correspond à une demande de lecture pour affichage de la mémoire programme. La branche 39 illustre une autre fonction. En effet, le contrôle d'accès de l'invention peut être mis en oeuvre pour n'importe quelle fonction de traitement requérant un accès à la mémoire programme.

Chaque branche 36, 37, 38, 39 commence par une instruction de branchement à la zone de la mémoire auxiliaire contenant le sous-programme correspondant. Ces instructions de branchement sont illustrées en figure 2 par des blocs respectifs 39 (SPS), 40 (LMEM), 41 (DISP) et 42 (MODEi). Les sous-programmes correspondants exécutent des algorithmes de contrôle d'accès (blocs 43 - ALGO1, 44 - ALGO2, 45 - ALGO3, 46 - ALGOi).

Les algorithmes ont été illustrés en figure 2 comme étant propres à chaque fonction. Cependant, certaines fonctions (par exemple, la fonction de chargement de mémoire flash et d'affichage du contenu de la mémoire) peuvent faire appel aux mêmes algorithmes. Il s'agit là d'un choix du fabricant et/ou du développeur mais qui doit être défini lors de la programmation de la mémoire auxiliaire.

Les algorithmes délivrent chacun un résultat indicateur de cohérence entre la clé (par exemple, la clé K1, K2, K3, Ki, dédiée à la fonction) des registres 21 par rapport à des informations contenues, de préférence, dans la mémoire programme. Les tests de cohérence (bloc 47, 48, 49, 50) conduisent, dans la négative, à un branchement sur la fin (bloc 51, E) du programme de contrôle d'accès. Si le résultat du test est correct, on se branche sur le sous-programme (bloc 52 - SBFPG, bloc 53 - LMEMPG, bloc 54 - DISPPG, bloc 55 - PGi) correspondant à la fonction désormais autorisée.

En figure 2, seul le sous-programme de fonctionnement en mode pas à pas d'un programme enregistré dans la mémoire 2 a été légèrement détaillé. Un tel sous-programme requiert en effet selon l'invention une génération automatique de l'interruption prioritaire PRIORIN. A chaque instruction pas à pas du programme testé, on active (bloc 57, PRIORIN ACTIV) une nouvelle interruption logicielle PRIORIN. Cette activation d'interruption PRIORIN se fait alors que l'interruption est déjà en cours d'exécution. Toutefois, comme celle-ci n'est pas interruptible par elle-même, on exécute une instruction de sortie d'interruption (bloc 58, INTERR OUT). L'exécution de cette instruction permet de connecter la mémoire programme 2 contenant le programme testé (bloc 56, PGPAL) à l'entrée d'instruction du microprocesseur (par le multiplexeur 22). Le programme s'exécute donc. Toutefois, une seule instruction peut s'exécuter car l'interruption PRIORIN est de nouveau activée. On entre donc de nouveau dans le mode interrompu avec connexion de la mémoire d'autorisation à l'entrée d'instruction du microprocesseur. Le bouclage de ce mode de fonctionnement (bloc 31) s'effectue alors jusqu'à la fin du programme à tester.

Quand l'exécution d'une des fonctions spécifiques 40, 41 ou 42 par le biais de la mémoire auxiliaire est terminée, on peut retourner au programme principal en se branchant sur la fin du programme de contrôle d'accès (bloc 51, E) ou, comme cela est illustré en sortie des blocs 53, 54, 55, remettre le programme de la mémoire auxiliaire dans un état d'attente d'une commande de l'utilisateur (bloc 59, UTIL). Selon la commande, on se branche sur la fin du programme de contrôle d'accès ou sur l'attente d'une fonction (bloc 35).

Selon l'invention, les mécanismes de contrôle d'accès nécessitent :
- que le programmeur de la mémoire auxiliaire (le fabricant du circuit intégré ou le développeur) connaisse tous les algorithmes et toutes les fonctions devant être contenues dans la mémoire auxiliaire. Il peut ainsi la programmer de manière non modifiable. Les contenus des mémoires de données et programme n'ont pas besoin d'être connus de ce programmeur. Le cas échéant, celui-ci programme une partie de la mémoire de démarrage.
- un développeur autorisé doit connaître les algorithmes et les fonctions contenues dans la mémoire auxiliaire. Le cas échéant, il n'est pas nécessaire qu'il connaisse toutes les fonctions. Seules celles qui lui sont nécessaires pour développer le programme et faire fonctionner le circuit intégré peuvent lui être communiquées. Par exemple, certaines fonctions spécifiques (par exemple, une fonction ne servant qu'au test du circuit pour le fabricant) peuvent n'être connues que du programmeur initial de la mémoire auxiliaire. Le développeur autorisé a accès à la mémoire programme, au registre de clés ainsi qu'à la mémoire de données et à la mémoire de démarrage. Le développeur n'a pas accès à la mémoire auxiliaire qui ne peut qu'être lue pour exécution du contrôle d'accès, sauf si le développeur est aussi le programmeur de cette mémoire auxiliaire.
- un développeur pirate peut écrire des clés dans les registres correspondants. Toutefois, s'il ne connaît pas les algorithmes contenus dans la mémoire auxiliaire, ou s'il ne connaît pas les mots localisés aux adresses prédéfinies de la mémoire programme, la probabilité pour qu'il écrive les bonnes clefs est très faible. Par conséquent, le programme de contrôle d'accès (figure 2) ne passera pas les tests 47 à 50 et empêchera l'accès à la mémoire programme.

Si le contrôle d'accès s'applique à une partie de la mémoire de données, les algorithmes utilisent, par exemple, des mots de la mémoire programme pour les combiner avec les clés.

La figure 3 représente, par un schéma fonctionnel, un mode de réalisation d'un multiplexeur mémoire 22 selon l'invention. Ce multiplexeur a pour rôle de sélectionner l'une des mémoires parmi la mémoire auxiliaire 20, la mémoire de démarrage 4, la mémoire programme 2 et la mémoire de données 3, pour accéder au microprocesseur 10. Le bloc multiplexeur 22 reçoit, comme signaux de commande, un signal indicateur de démarrage BS pour le déclenchement de la mémoire de démarrage 4, un signal CTRL délivré par le bloc sélecteur 23, et le signal PSEN délivré par l'interface mémoire (14, figure 1) du microprocesseur. En figure 3, la sélection est illustrée par trois multiplexeurs. Un premier multiplexeur 61 sélectionne, sous commande du signal BS, l'une des mémoires entre la mémoire de démarrage 4 et la mémoire programme 2. La sortie du multiplexeur 61 est envoyée sur une entrée d'un multiplexeur 62 dont une deuxième entrée est reliée à la mémoire de données 3. Le multiplexeur 62 sélectionne, sous commande du signal PSEN, la mémoire de données ou une mémoire programme. Sa sortie est reliée en entrée d'un multiplexeur 63 dont une deuxième entrée reçoit la mémoire auxiliaire 20. Le multiplexeur 63 est commandé par le signal CTRL issu du sélecteur 23.

Bien entendu, le circuit 23 est à adapter au nombre de mémoires associées au circuit intégré.

La figure 4 représente un mode de réalisation d'un sélecteur 23 selon l'invention. Selon ce mode de réalisation simplifié, ce sélecteur est basé sur une porte logique de type ET 65 à trois entrées. Une première entrée reçoit le signal MODE. Une deuxième entrée reçoit le signal ACTIV fourni par le contrôleur d'interruption 13, indicateur d'une interruption prioritaire PRIORIN active. Une troisième entrée reçoit le signal PSEN ayant traversé un inverseur 66. Le sélecteur 23 délivre le signal CTRL de sélection de la mémoire auxiliaire. Cette sélection est effective à la triple condition que le mode de programmation soit sélectionné, qu'une interruption prioritaire PRIORIN soit active et qu'il n'y ait pas d'accès à la mémoire de données en cours. Dans l'exemple de la figure 4, on suppose que le signal MODE est à l'état haut quand le mode programmation est demandé. Le signal PSEN est, dans cet exemple, à l'état haut quand un accès à la mémoire de données est en cours. Le signal ACTIV est actif à l'état haut.

La figure 5 représente un mode de réalisation d'un générateur 24 d'interruption PRIORIN. Ce générateur 24 est, par exemple, constitué d'une porte de type OU 68 à trois entrées. Une première entrée de la porte 68 reçoit le signal INTPRIORIN fourni par le décodeur 15. Une deuxième entrée de la porte 68 est reliée en sortie d'un circuit d'activation 69 recevant en entrée le signal MODE et un signal DEB indicateur du début du mode à accès contrôlé. Une troisième entrée de la porte 63 reçoit le signal EXTPRIORIN provenant de l'extérieur du circuit intégré.

Le rôle du circuit 24 est de délivrer l'interruption prioritaire PRIORIN dès qu'elle se présente sur l'un de ces signaux d'entrée. Cette interruption peut donc être déclenchée par la borne externe du circuit intégré (signal EXTPRIORIN), être générée en interne (signal INTPRIORIN) ou être déclenchée par le circuit 69. Le circuit 69 délivre une sortie à l'état actif (par exemple, l'état haut) à chaque initialisation à la condition que le signal MODE soit en accès contrôlé.

D'autres circuits de sélection et de génération pourront être prévus. Par exemple, on pourra prévoir plusieurs signaux EXTPRIORIN provenant de l'extérieur et/ou des états actifs différents pour les signaux.

Un avantage de la présente invention est que le système de contrôle d'accès est particulièrement fiable tout en étant versatile. En effet, un développeur autorisé peut individualiser les fonctions de contrôle d'accès.

Un autre avantage de l'invention est de permettre à un développeur autorisé un accès au contenu de la mémoire programme même après fabrication lorsque le circuit est en cours d'utilisation. Un tel fonctionnement n'est pas possible avec les systèmes classiques de protection par fusibles.

La mise en oeuvre de l'invention trouve un intérêt particulier pour le chargement et la maintenance de programmes et de données dans un circuit intégrant un microprocesseur. Ces opérations peuvent être faites à distance (téléchargement, télémaintenance), la fiabilité du contrôle d'accès rendant sans risque la connexion du circuit à un réseau partagé à accès non contrôlé.

En pratique, la communication entre le circuit et l'extérieur s'effectue de façon classique par l'intermédiaire de l'interface 7 (figure 1).

Les mémoires pourront être de n'importe quel type à l'exception de la mémoire auxiliaire dont le contenu doit être programmable une seule fois que ce soit à la fabrication ou postérieurement.

Structurellement, un circuit intégré selon l'invention se caractérise par la présence d'une mémoire auxiliaire ou d'autorisation, contenant les fonctions bloquées après une première programmation et qui est distincte (au moins fonctionnellement) de la mémoire (par exemple, la mémoire programme) contenant des fonctions dont on souhaite protéger l'accès. Un circuit comporte également une borne supplémentaire pour l'activation de l'interruption prioritaire depuis l'extérieur (signal EXTPRIORIN). Bien entendu, le contrôleur d'interruption doit être adapté et l'on doit également prévoir le sélecteur, le générateur de l'interruption PRIORIN, des registres de clés spécifiques et un multiplexeur mémoire ou équivalent. A cet égard, bien que certaines fonctions aient été décrites par certains éléments matériels (multiplexeur, portes logiques), elles pourront être réalisées d'une autre façon, par exemple, sous forme logicielle.

Bien entendu, la présente invention est susceptible de diverses variantes et modifications qui apparaîtront à l'homme de l'art. En particulier, le nombre de fonctions sera adapté à la destination du circuit intégré.

## Revendications

1. Procédé de contrôle d'accès à tout ou partie du contenu d'une première mémoire (2, 3) intégrée avec un microprocesseur (10), **caractérisé en ce qu'**il consiste :
à utiliser une interruption prioritaire (PRIORIN) ;
à utiliser au moins un registre de clés (21) ; et
à appliquer au moins un algorithme de contrôle d'accès contenu dans une deuxième mémoire auxiliaire (20) et faisant appel au contenu d'au moins un élément de mémorisation (2) également intégré et au contenu du registre de clés, le contenu de la mémoire auxiliaire étant programmable une seule fois.

2. Procédé selon la revendication 1, **caractérisé en ce qu'**au moins un sous-programme permettant d'autoriser l'exécution d'une fonction d'accès à la première mémoire (2, 3), est contenue dans la mémoire auxiliaire (20).

3. Procédé selon la revendication 1 ou 2, **caractérisé en ce que** l'interruption prioritaire (PRIORIN) est non-interruptible, même par elle-même.

4. Procédé selon l'une quelconque des revendications 1 à 3, **caractérisé en ce qu'**il consiste à générer ladite interruption prioritaire (PRIORIN) à la condition qu'un signal (MODE) indicateur d'un mode de fonctionnement à contrôle d'accès soit dans un état actif.

5. Procédé selon l'une quelconque des revendications 1 à 4, **caractérisé en ce que** ladite interruption prioritaire (PRIORIN) peut être générée à l'apparition d'une demande d'interruption provenant de l'extérieur (EXTPRIORIN) du circuit intégré ou de l'intérieur (INTPRIORIN).

6. Procédé selon l'une quelconque des revendications 1 à 5, **caractérisé en ce que** ladite première mémoire est une mémoire programme (2) contenant des fonctions embarquées.

7. Procédé selon la revendication 6, **caractérisé en ce que** ledit élément de mémorisation est constitué de la mémoire programme (2).

8. Circuit intégrant un microprocesseur (10) et au moins une première mémoire (2, 3), **caractérisé en ce qu'**il comporte une deuxième mémoire auxiliaire (20) propre à contenir au moins un sous-programme permettant d'autoriser l'exécution d'une fonction d'accès à ladite première mémoire (2, 3), ladite mémoire auxiliaire (20) étant programmable une seule fois.

9. Circuit selon la revendication 8, **caractérisé en ce qu'**il comporte des moyens (22) pour sélectionner, en entrée d'une interface mémoire (14) du microprocesseur (10), une mémoire parmi au moins :
ladite mémoire auxiliaire (20) ; et
ladite première mémoire (2, 3), la sélection de ladite première mémoire, autrement que pour l'exécution d'une fonction qu'elle contient, nécessitant une autorisation à partir d'un algorithme contenu dans la mémoire auxiliaire et faisant appel au contenu d'au moins un élément de mémorisation (2) également intégré et au contenu du registre de clés.

10. Circuit selon la revendication 9, **caractérisé en ce que** la première mémoire et l'élément de mémorisation sont une seule et même mémoire programme (2).

11. Circuit selon l'une quelconque des revendications 8 à 10, **caractérisé en ce qu'**il comporte des moyens (24) pour générer une interruption prioritaire d'exécution dudit sous-programme, la génération s'effectuant à condition :
qu'un signal (MODE) indicateur d'un mode de fonctionnement à contrôle d'accès soit dans un état actif ;
qu'un accès à la première mémoire (2) ait été demandé autrement que pour une exécution non interruptible d'une des fonctions qu'elle contient ; et
qu'un signal d'interruption (EXTPRIORIN, INTPRIORIN) soit actif, l'interruption prioritaire résultante étant non interruptible, même par elle-même.

12. Circuit selon l'une quelconque des revendications 8 à 11, **caractérisé en ce qu'**il comporte des moyens pour mettre en oeuvre le procédé de contrôle d'accès conforme à l'une quelconque des revendications 1 à 7.
